# EUROPÄISCHE PATENTANMELDUNG

(11) **EP 2 789 675 A1**
(43) Veröffentlichungstag der Anmeldung: **15.10.2014**
(21) Anmeldenummer: 14162782.8
(22) Anmeldetag: 31.03.2014
(51) Int. Cl.: C10J 3/30, B65G 53/46

(54) **Vergasungsreaktorsystem mit wenigstens einem Vergasungsreaktor zur Erzeugung eines brennbaren Gasgemisches**

(30) Priorität: 08.04.2013 DE 102013103500; 16.04.2013 DE 102013103844
(71) Anmelder: Nyenhuis, Markus, 48485 Neuenkirchen (DE)
(72) Erfinder: Nyenhuis, Markus, 48485 Neuenkirchen (DE)
(74) Vertreter: Tarvenkorn, Oliver

(57) **Zusammenfassung**

Bei einer Zufuhreinheit (10) zur Förderung eines Ausgangsstoffs zu einem Holzvergasungsreaktor (20) ist zwischen dem Vorratsbehälter (12) und der Fördervorrichtung (11) wenigstens ein abdichtbares Schleusenelement (14) angeordnet.

## Beschreibung

Die Erfindung betrifft ein Vergasungsreaktorsystem zur Erzeugung eines brennbaren Gasgemisches mit den Merkmalen des Oberbegriffs des Anspruchs 1.

Ein solches Vergasungsreaktorsystem ist aus der EP 1 436 364 bekannt. Der Nachteil besteht darin, dass Gas aus dem Reaktor in den gesamten Bereich von Vorratsbehälter und Fördervorrichtung gelangen kann und dort ein zündfähiges Gemisch mit entsprechendem Gefährdungspotential entstehen kann. Zudem wird der Förderstrom von außerhalb unterbrochen. Zum Füllen des Vorratsbehälters muss dessen Verschlusselement geöffnet werden, so dass Gas entweichen kann und Frischluft mit den bekannten nachteiligen Auswirkungen auf den Betrieb des Holzvergasungsreaktors nachströmen kann.

Zur Lösung schlägt die Erfindung vor, dass wenigstens ein abdichtbares Schleusenelement vorgesehen ist und zwar also stromaufwärts gesehen hinter der Fördervorrichtung, aber noch vor einem optionalen Vorratsbehälter oder einer weiteren Fördervorrichtung, die direkt aus einem weiter entfernten Bunker fördert.

Das Schleusenelement zeichnet sich dadurch aus, das es einerseits weitgehend gasdicht ist, andererseits den Förderstrom des Feststoffes nicht unterbricht.

Über das Schleusenelement kann also zwar der Ausgangsstoff, insbesondere in Form zerkleinerter Holzstücke, in die Förderwege gelangen, welche in den Reaktor führen. Andererseits wird aus dem Reaktor austretendes Gas am Schleusenelement gestoppt.

Das Schleusenelement kann eine Klappenkonstruktion sein. Das Gut fällt in einen Zwischenspeicherraum, der durch wenigstens eine Klappe versperrt ist. Die Klappe öffnet sich zeitweise, um das Gut in die nachfolgenden Förderwege rutschen zu lassen und schließt sofort wieder. Es besteht ständig ein Gasverschluss, solange die Klappe geschlossen ist, und nur im kurzen Moment der Öffnung ist diese Dichtigkeit nicht gegeben. Andererseits verschließt die in diesem Moment frei gegebene Schüttgutmenge die Förderleitung weitgehend, so dass nur wenig Gase und Dämpfe aus dem Vergasungsprozess stromaufwärts abziehen können. Es können auch zwei Klappen vorgesehen sein, die abwechselnd öffnen und schließen und zwischen sich eine Schleusenkammer ausbilden.

Vorzugsweise ist das Schleusenelement als eine Zellradschleuse ausgebildet. Hierdurch ist ein kontinuierlicher Förderbetrieb bei weitgehender Gasdichtigkeit gewährleistet.

Es kann auch als Schleusenelement eine Messerschleuse vorgesehen sein. Vorteilhafterweise ist die Messerschleuse zusätzlich angeordnet und zwar in Förderrichtung gesehen vor dem Schleusenelement. Diese zerkleinert den Ausgangsstoff weiter, so dass er die Zellradschleuse problemlos passieren kann und eine Blockade der Zellradschleuse durch eingeklemmte oder zu große Stücke vermieden wird.

Das Schleusenelement und die Messerschleuse können zudem in einem Bauteil miteinander verbunden sind.

Zwischen dem Vorratsbehälter und dem Schleusenelement kann eine zweite Fördervorrichtung angeordnet sein, um eine gezielte Zufuhr zum Schleusenelement in lockerer Schüttung zu gewährleisten und hierüber eine Blockade des Schleusenelements zu verhindern. Diese zweite Fördervorrichtung kann auch aus einem Sammeloder Aufgabebunker heraus fördern.

Ebenso kann ein gesonderter Vorratsbehälter vorgesehen sein, der optional, aber nicht notwendigerweise an seinem stromaufwärts gelegenen Ende zusätzlich verschlossen werden kann.

In dem Vergasungsreaktorsystem -- ist vorzugsweise wenigstens ein Füllstandssensor zwischen der Fördervorrichtung und dem Reaktorbehälter angebracht.

Der Füllstandssensor kann unmittelbar die gesamte Zufuhreinheit, die ggf. mehrere Fördervorrichtungen und wenigstens ein Schleusenelement umfasst, beeinflussen.

Der Füllstandssensor kann auch als Überfüllsicherung für den Reaktorbehälter dienen.

Möglich ist, den Füllstandssensor produktberührend und nicht produktberührend auszubilden.

Ein produktberührend ausgeführter Füllstandssensor sollte insbesondere explosionsgeschützt sein, da im Vergasungsprozess brennbare und eben auch explosive Gase entstehen.

Ein nicht produktberührend ausgeführter Füllstandssensor sollte außerhalb der produktführenden Vorrichtung angebracht sein. Der vorzugsweise zwischen der Fördervorrichtung und dem Reaktorbehälter anzuordnende Füllstandssensor kann beispielsweise ein kapazitiv, induktiv, opto-elektronisch oder mittels Licht-, Schall, Mikro-, Radar- oder Radiometriewellen etc. arbeitender Sensor sein. Beispielsweise kann auch das zum Rühren im Vergasungsreaktor benötigte Drehmoment oder die zum Antrieb des Rührwerkes benötigte elektrische Energie erfasst und zu einem Füllstandswert umgerechnet werden.

Die im Vergasungsreaktor ausgeführte Rührvorrichtung kann mehrere Funktionen gleichzeitig oder auch jeweils einzeln erfüllen. Die Rührvorrichtung kann den Gutstrom unterstützen, vergleichmäßigen sowie auflockern oder verdichten und dosieren, um eine optimale Vergasung im Vergasungsreaktor zu erreichen. Ergänzend kann ein Messwert an dem Rührwerk erfasst und zu einem Füllstandswert umgerechnet werden. In einer bevorzugten Ausführungsform ist es möglich, das Rührwerk derart auszugestalten, dass durch angebrachte Armelemente oder Rührpaddel und Abstreifvorrichtungen etc. eine automatisierte Reinigung des gesamten Vergasungsreaktors, insbesondere im Bereich des Reaktoroberteiles sowie des Guttrichters und den darunter befindlichen, thermisch belasteten Zonen der Vergasung und der Reduktion, erreicht werden kann.

Es sollte auch wenigstens ein Füllstandssensor im Bereich des Vorratsbehälters angebracht sein kann, um einen Nachschubbedarf an Brennstoff frühzeitig erkennen zu können.

In dem Vorratsbehälter kann eine Vereinzelungsvorrichtung, insbesondere ein Rührwerk angeordnet sein, die verhakte und verbackene Teile löst, so dass nur lockeres Schüttgut zum Schleusenelement gefördert wird.

Die Erfindung wird anhand von Ausführungsbeispielen erläutert, die in den Zeichnungen dargestellt sind. Die Figuren zeigen:
- Fig. 1: ein Vergasungsreaktorsystem gemäß einer ersten Ausführungsform in schematischer Darstellung und
- Fig. 2: ein Vergasungsreaktorsystem gemäß einer zweiten Ausführungsform in schematischer Darstellung.

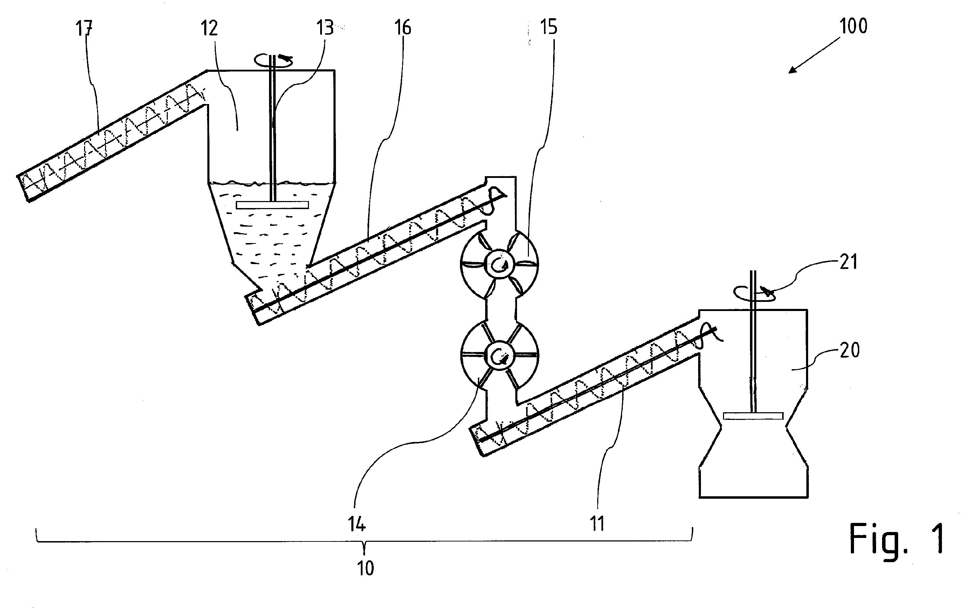

Figur 1 zeigt eine erste Ausführungsform eines Vergasungsreaktorsystems 100. Dieses umfasst im Wesentlichen eine Zufuhreinheit 10, die mehrere Einzelkomponenten umfasst und einen in seinem inneren Aufbau an sich bekannten Vergasungsreaktor 20.

Ein Vorratsbehälter 12 wird über eine erste Fördervorrichtung 17, bei der es sich beispielsweise um einen Schneckenförderer handeln kann, beschickt. Eine zweite Förderrichtung 16 verläuft von dem Vorratsbehälter 12, der mit einem Rührwerk 13 ausgestattet ist, zu einer zweiten Fördervorrichtung 16, wiederum bevorzugt in Form eines Schneckenförderers. Diese mündet oberhalb einer Messerschleuse 15, durch die das Gut erforderlichenfalls zerkleinert wird und von der es in eine Zellradschleuse 14 gelangt. Von deren Ausgangsöffnung wiederum gelangt es auf einen weiteren Schneckenförderer, nämlich die Fördervorrichtung 11, und darüber in eine Öffnung, die im Kopfbereich in der Seitenwand des Vergasungsreaktors 20 vorgesehen ist, in den Vergasungsreaktor 20 hinein. Aus dem Vergasungsreaktor aufsteigende Brenngase und Dämpfe können gegen die Förderrichtung in den Förderweg eindringen, jedoch nur über die Fördervorrichtung 11. An der Zellradschleuse und ggf. an der Messerschleuse werden Brenngase und Dämpfe weitgehend zurückgehalten. Zugleich wird durch die Schleusenelemente 14, 15 verhindert, dass Frischluft unkontrolliert in den Vergasungsreaktor gelangt. Bei den durch die Schleusenelemente gebildeten Gasbarrieren kommt es nicht auf vollständige Gasdichtheit an, sondern darauf, den Gastaustausch über die Barriere auf einen sehr kleinen Volumenstrom zu reduzieren, der weder einen großen Verlust an Brenngas bedeutet noch einen Zutritt an Frischluft in einem Maß, der zu deutlichen Einflüssen auf den Vergasungsprozesses führen könnte.

Ein Füllstandssensor kann bei der dargestellten Ausführungsform durch ein Rührwerk 21 gebildet sein, das primär der Auflockerung des Rohstoffes im Vergasungsreaktor 20 dient. Außerdem kann das Rührwerk der automatisierten Reinigung des Vergasungsreaktors dienen. Außerdem kann über die für die Rotation des Rührwerks 21 im Vergasungsreaktor 20 benötige motorische Antriebsenergie auf den Füllgrad im Reaktor zurückgeschlossen werden.

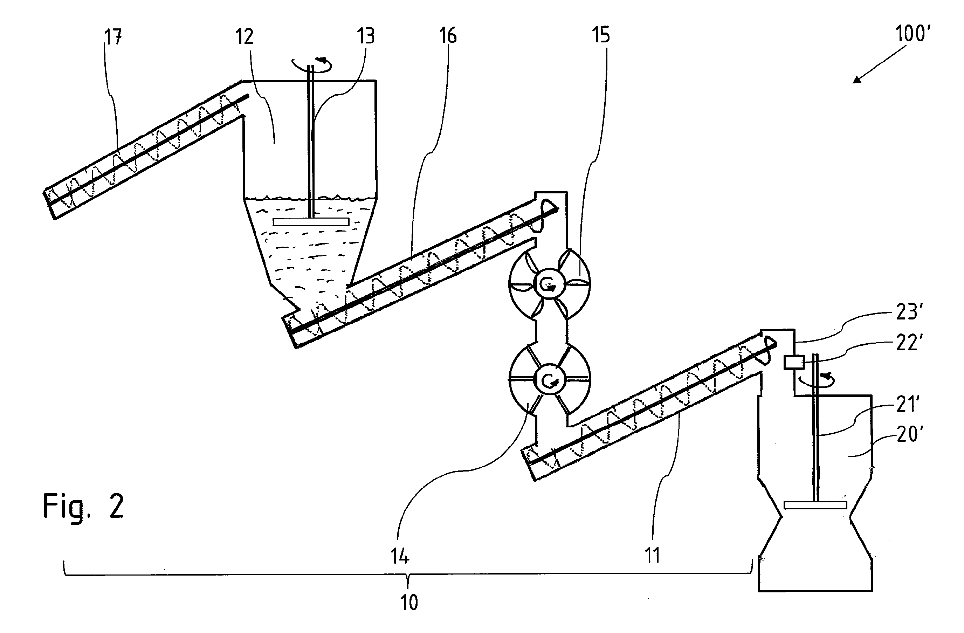

Ein in Figur 2 gezeigtes Vergasungsreaktorsystem 100' gemäß einer zweiten Ausführungsform unterscheidet sich von dem Vergasungsreaktorsystem 100 nach Figur 1 im Wesentlichen durch die Art der Mündung der Fördervorrichtung 11 im Vergasungsreaktor 20': Hier mündet die Fördervorrichtung oberhalb des Vergasungsreaktors 20', so dass das Gut von oben durch ein Zwischenrohr 23' und eine Öffnung in einem den Kopfbereich verschließenden Deckel gelangen kann.

Damit kann der gesamte obere Bereich des Vergasungsreaktors 20' vollständig mit Brennstoff gefüllt werden. Diese weitgehende Vollfüllung verhindert das sonst in derartigen Reaktoren übliche Aufsteigen, Niederschlagen, Anhaften von Kondensat und Teer etc. so dass der Reinigungs- und Instandhaltungsaufwand deutlich reduziert wird. Es können somit vorn vornherein weniger Gase und Dämpfe bis zu dem erfindungsgemäß stromaufwärts vorgesehenen Schleusenelement gelangen.

In dem Zwischenrohr 23' kann zudem günstig ein Füllstandssensor 22 platziert werden, der von oben in den Kopfbereich des Vergasungsreaktors 20' und/oder in das Zwischenrohr 23 blickt und die Füllstandshöhe darin abtastet. Der Sensor liegt in dem Zwischenrohr 23' vor den Einflüssen des Vergasungsprozesses geschützt und ist dort für Wartungszwecke gut zugänglich. Wird der Füllstandssensor in nicht produktberührender Weise ausgeführt, ist es möglich, das Zwischenrohr ganz oder teilweise in einem Material auszuführen, welches für die Signale des kapazitiv, induktiv, opto-elektronisch oder mittels Licht-, Schall, Mikro-, Radar- oder Radiometriewellen etc. arbeitender Sensors durchlässig ist, so dass der Sensor außerhalb des Zwischenrohres angebracht werden kann.

## Patentansprüche

1. Vergasungsreaktorsystem (100; 100') mit wenigstens einem Vergasungsreaktor (20) zur Erzeugung eines brennbaren Gasgemisches, mit wenigstens einer Zufuhreinheit (10) zur Förderung eines Ausgangsstoffs aus Holz oder Biomasse, welche Zufuhreinheit (10) mit einer Fördervorrichtung (11) oben und/oder seitlich im Kopfbereich eines Vergasungsreaktors (20; 20') mündet,
**dadurch gekennzeichnet, dass** im Förderweg und vor der in den Vergasungsreaktor (20; 20') mündenden Fördervorrichtung (11) wenigstens ein weitgehend abdichtbares Schleusenelement (14) angeordnet ist.

2. Vergasungsreaktorsystem (100; 100') nach Anspruch 1, **dadurch gekennzeichnet, dass** das Schleusenelement als eine Zellradschleuse (14) ausgebildet ist.

3. Vergasungsreaktorsystem (100; 100') nach Anspruch 1, **dadurch gekennzeichnet, dass** das Schleusenelement als eine Messerschleuse (15) ausgebildet ist

4. Vergasungsreaktorsystem (100; 100') nach Anspruch 2 und 3, **dadurch gekennzeichnet, dass** die Messerschleuse (15) in Förderrichtung gesehen vor der Zellradschleuse (14) angeordnet ist.

5. Vergasungsreaktorsystem (100; 100') nach wenigstens einem der Ansprüche 1 bis 3, **dadurch gekennzeichnet, dass** das Schleusenelement (14) und die Messerschleuse (15) in einem Bauteil miteinander verbunden sind.

6. Vergasungsreaktorsystem nach wenigstens einem der Ansprüche 1 bis 5, **dadurch gekennzeichnet, dass** das Schleusenelement als Klappensystem ausgebildet sein kann

7. Vergasungsreaktorsystem (100; 100') nach wenigstens einem der vorhergehenden Ansprüche, **dadurch gekennzeichnet, dass** vor dem Schleusenelement (14) eine zweite Fördervorrichtung (16) angeordnet ist.

8. Vergasungsreaktorsystem (100; 100') nach wenigstens einem der vorhergehenden Ansprüche, **dadurch gekennzeichnet, dass** in Förderrichtung gesehen vor dem Schleusenelement (14) wenigstens ein Vorratsbehälter (12) für den Ausgangsstoff angeordnet ist.

9. Vergasungsreaktorsystem (100; 100') nach Anspruch 8, **dadurch gekennzeichnet, dass** in dem Vorratsbehälter (12) eine Vereinzelungsvorrichtung, insbesondere ein Rührwerk (13), angeordnet ist.

10. Vergasungsreaktorsystem (100; 100') nach Anspruch 8 oder 9, **dadurch gekennzeichnet, dass** mehrere Vergasungsreaktoren (20; 20') vorgesehen sind, die von einem gemeinsamen Vorratsbehälter (12) gespeist werden.

11. Vergasungsreaktorsystem (100') nach einem der Ansprüche 1 bis 10,
**dadurch gekennzeichnet, dass** die Fördervorrichtung (11) oberhalb des Vergasungsreaktors (20') mündet und dass das Ende der Fördervorrichtung (11) über ein Zwischenrohr (23') an eine Deckelöffnung des Vergasungsreaktors (20') angeschlossen ist.

12. Vergasungsreaktorsystem (100') nach Anspruch 11, **dadurch gekennzeichnet, dass** wenigstens ein Füllstandssensor (22') in oder an dem Zwischenrohr (23') angeordnet ist.
